# EUROPEAN PATENT SPECIFICATION

(11) **EP 3 406 414 B1**
(45) Date of publication and mention of the grant of the patent: **13.05.2020**
(21) Application number: 18174432.7
(22) Date of filing: 25.05.2018
(51) Int. Cl.: B29C 44/60, G01N 27/22, G01N 7/10, G01N 15/08, G01N 3/08

(54) **METHOD FOR OBTAINING AN INDEX OF CONFORMITY OF THE PHYSICAL AND MECHANICAL PROPERTIES OF FOAMED MATERIALS, IN PARTICULAR OF EXPANDED SINTERED POLYSTYRENE**
VERFAHREN ZUM ERHALTEN EINES INDEX DER ÜBEREINSTIMMUNG VON PHYSIKALISCHEN UND MECHANISCHEN EIGENSCHAFTEN VON GESCHÄUMTEN MATERIALIEN, INSBESONDERE AUS EXPANDIERTEM GESINTERTEM POLYSTYROL
PROCÉDÉ PERMETTANT D'OBTENIR UN INDICE DE CONFORMITÉ DES PROPRIÉTÉS PHYSIQUES ET MÉCANIQUES DE MATÉRIAUX EXPANSÉS, NOTAMMENT DU POLYSTYRÈNE FRITTÉ EXPANSÉ

(30) Priority: 26.05.2017 IT 201700057550
(43) Date of publication of application: 28.11.2018
(73) Proprietor: European Manufacturers of Expanded Polystyrene, B-3680 Maaseik (BE)
(72) Inventor: BOCCALERI, Enrico, 15122 Alessandria (AL) (IT); PALIN, Luca, 10146 Torino (TO) (IT); MILANESIO, Marco, 12062 Cherasco (CN) (IT); GARBAGNA, Paolo, 27100 Pavia (PV) (IT); PIANA, Marco, 28100 Novara (NO) (IT)
(74) Representative: Frasson, Luca

(56) References cited:
- DE-A1- 19 810 092
- DE-A1-102013 217 149
- DE-B- 1 222 287
- US-A- 2 913 899
- US-A- 3 028 548
- US-A- 5 932 811
- US-A1- 2007 114 691
- LEE-KUO LIN: "Manufacturing Quality Investigation of EPS Blocks with Homogenous Test", UNKNOWN, 31 December 2011 (2011-12-31), XP055509277, & Anonymous: "Programme for the 4th International Conference on the use of Geofoam Blocks in Construction Applications", , 31 December 2011 (2011-12-31), XP055509314, Retrieved from the Internet: URL:https://www.vegvesen.no/_attachment/22 66659/binary/1252121?fast_title=Conference +Programme+EPS+2011.pdf [retrieved on 2018-09-24]
- Anonymous: "Compression and Push-Out Force Comparison of Arthrex to Competitor Compression Screws", , 31 December 2014 (2014-12-31), XP055426024, Retrieved from the Internet: URL:https://d1psc3qesfsa61.cloudfront.net/ pdfs/CXiU-i9uHkG-cQFH6RJvng/CXiU-i9uHkG-cQ FH6RJvng.pdf?Expires=1510852949&Signature= j25mgc2y0fqafXi8X1G6eiXhtLsXKlRqI7Y25Kthg1 YhsLp1lOrR1yfvKfbP8WuG9u2r6RutPJTE79oDqjrb ZJUsJiLClrp5WkQa7SbRMFqYqrdzi7RF2MQbG8502e 2-Z6vMA6GFSQpe0~zi8xwJowZb09BUSi0jk-R03F5G Yhgato4QLp [retrieved on 2017-11-16]
- Nicholas Thomas Rocco: "Scholars' Mine Characterization of expanded polystyrene (EPS) and cohesive soil mixtures", , 31 December 2012 (2012-12-31), XP055423293, Retrieved from the Internet: URL:http://scholarsmine.mst.edu [retrieved on 2017-11-09]
- Anonymous: "Website fxi.com", , 1 December 2014 (2014-12-01), XP055423493, Retrieved from the Internet: URL:https://web.archive.org/web/2014120706 0509/http://fxi.com/foam-technologies/test ing-services.php#four [retrieved on 2017-11-09]

## Description

The present invention relates to a method for obtaining an index of conformity of the physical and mechanical properties of foamed materials, in particular of expanded sintered polystyrene (EPS).

It is known that materials and articles made of low-density materials, typically consisting of sintered expanded polystyrene-based materials require, for the analysis and assessment of their characteristics, the use of traditional methods which are often incapable of providing a rapid, precise, economical and possibly non-destructive assessment of the material itself.

In the background, there is a need to test the characteristics of such foamed materials. One may consider, for example, the sector of packaging, in which expanded sintered polystyrene is extensively used for the packaging of various types of products.

Both the manufacturer of the foamed material and the users of said material have the need to test, for example by sampling, the production of material on one hand and the quality of the product used for the packaging of their products on the other.

In addition, since the production process uses water vapour, there is a need to rapidly determine the moisture present in the pieces and its removal, because of the possible damages and problems that can derive from the presence of water and/or moisture in some applications.

Since traditional testing methods are currently used to verify the properties of these materials, entailing for example subjecting the material to traction/compression/flexure tests after obtaining a standard specimen, or successive weight measurements carried out after drying the specimen, with treatment times that are highly variable according to the mass, thickness and geometry of the specimen, it is readily apparent that such tests cannot be carried out directly in the company by the manufacturer or by the user, performing sample tests on product lots.

Not only must traditional tests be performed in measurement laboratories equipped with test machines that are very costly, bulky and requiring particular adjustments in use, but to perform such tests it is often also necessary to obtain standard specimens, appropriately dimensioned, so that such tests are also destructive of the product or of the article to be tested.

It is possible therefore to state that the current background does not contemplate test methods and instruments that allow to carry out rapidly, i.e. in time intervals compatible with production, and economically, tests that are almost or entirely non-destructive on products made of foamed materials, for example expanded sintered polystyrene, and perform in real time a comprehensive analysis of the data that allows to establish the conformity of the product itself in a reliable way.

The absence of such methods and instruments allows neither the manufacturer nor the user to carry out sampling tests on the products manufactured or to be used for packaging, directly during manufacture and/or utilisation, and therefore currently there is a great need to have available such methodologies that allow to obtain, in a rapid and almost or entirely non-destructive manner an index of conformity of the materials of interest.

Nowadays, some standards provide references that can be used to test the properties of foamed polymeric materials. Among them it is possible to mention, by way of example, the standards for the mechanical characterisation of materials manufactured in the form of plates, such as the standards UNI EN 12080:2013, UNI EN 1607:2013 and UNI EN 826:2013.

The testing methods to which these standards refer have, as stated, several drawbacks, which the present invention proposes to overcome.

Among such drawbacks it is again to be stressed that these methods for the performance of mechanical traction, compression and flexure tests, require obtaining a sample of a specific geometry from the article made of foamed material. Sample tests must then have shapes, dimensions and dimensional ratios that are incompatible if the test sample has to be obtained starting from an article with extremely variable dimensions and shape, since one of the common uses is the containment and packaging of goods, and has to be made of foamed material such as expanded sintered polystyrene (EPS).

An additional drawback that affects the known methods of background is that they require an appropriate preparation of the sample, comprising for example a step of gluing with glues that are able not to alter the structure of the material and not to dribble, as well as a curing of the specimen before the test, which clearly translates into an expenditure of time and in the impairment of the test specimen that cannot be reused any more, with the further risk that use of such glues may alter the result of the test itself.

With reference to the methods and to the instruments of analysis of the properties of foamed materials that are known in the background, some procedures adopted by manufacturers of expanded polystyrene require to perform a test called "*fusion test*" based on the resistance of the expanded structure to the passage of air, injected with a needle that is holed on the tip.

According to the background, moreover, some procedures adopted by manufacturers of expanded polystyrene materials entail the performance of a test whereby humidity is assessed by measuring it by means of pointed conductometric probes.

In particular this latter test, however, is influenced on one hand by the degree of purity of the water present in the sample to be tested, on the other hand by the humidity present on the surface of the sample, and in the last case it is unable to provide a measurement of the massive humidity present inside the entire analysed sample, which is an essentially important feature for long-stocked packaged. A method according to the preamble of claim 1 is known from the publication "Manufacturing Quality Investigation of EPS Blocks with Homogeneous Test" of Lee-Kuo Lin.

The specific task of the present invention is to provide a method for obtaining an index of conformity of the physical and mechanical properties of foamed materials, in particular of expanded sintered polystyrene, that solves the technical problems described above, overcomes the drawbacks and the limits of the prior art, making it possible to obtain said index of conformity in a simple, fast and economical way, so that the analysis can be carried out by sampling directly by the manufacturer and/or by the user of the foamed material also during the normal production and/or utilisation cycle.

Within this task, a purpose of the present invention is to provide a method that allows to identify univocal descriptors based on the results deriving from different and complementary physical and/or mechanical tests, thus unifying in a single parameter a high quantity of experimental data, able to qualify the sample and quantify the performance that make it suitable for a specific use.

Another purpose of the invention is to provide specifications for the execution of the test procedures directed at assuring the optimal characterisation of the physical and mechanical properties of foamed materials, in particular of expanded sintered polystyrene, to allow the execution on pieces of various and different geometry and size, possibly in a fast, non-destructive manner and with no need to obtained specimens.

Another purpose of the invention is to define a quality control procedure for pieces and articles using the aforesaid characterisation methods and instruments through a hierarchy of application, identifying in each case the type, the number and the sequence of measurements to be carried out, able to guarantee the quality of suitable pieces with the fastest and non-destructive measurement, followed only if necessary by subsequent tests to further detail the quantity and compose the performance data.

Yet another purpose of the present invention is to provide a method for obtaining an index of conformity of the physical and mechanical properties of expanded sintered polystyrene that is based on a set of instruments that are easy to use, economical to purchase and maintain, and able to yield reliable results in a short time.

Another purpose of the invention is to provide a method to obtain an index of conformity that does not require particular preparations of the sample, thus making it possible to limit, if not completely to eliminate, the risk that the test procedures, with particular regard to the preparation of the sample, may alter the results of the test itself.

An additional purpose of the present invention is to provide a method that can be employed and executed rapidly and requires neither the preparation of the sample nor its curing in the preparation step.

Still another purpose of the present invention is to provide a method for obtaining an index of conformity of the physical and mechanical properties of expanded sintered polystyrene that provides a numerical characterisation of the material with reproducibility and statistical reliability that are comparable, when applicable, to the methods prescribed by the standards, which as stated are more destructive, costlier, requiring a greater expenditure of time and, in general, more difficult to carry out.

The purposes according to present invention are achieved by a method for obtaining an index of conformity of the physical and mechanical properties of foamed materials, in particular of expanded sintered polystyrene, according to claim 1.

Further features of the method for obtaining an index of conformity of the physical and mechanical properties of foamed materials are provided in the dependent claims.

The features and advantages of the method according to the present invention will be more readily apparent from the following, exemplifying and non-limiting description of the invention.

The method for obtaining an index of conformity of the physical and mechanical properties of a foamed material, in particular of expanded sintered polystyrene, according to the invention, comprises at least two tests for measuring the properties of a sample of expanded sintered polystyrene selected from:
- a test for measuring the mechanical traction and/or compression properties of said sample;
- a test for measuring the physical properties correlated with the compactness, the morphology and the size of the particles of said sample;
- a test for measuring the physical properties correlated with the cohesion of the particles of said sample;
- a test for measuring the physical properties correlated with the humidity of said sample.

The aforesaid at least two tests for measuring the properties of the sample providing at least two sets of measurement data.

The method for obtaining the index of conformity then comprises the step of defining a unique, positive or negative index of conformity of the properties of the sample obtainable starting from said at least two sets of measurement data.

The step of defining the index of conformity of the sample comprises the step of generating a numerical index obtained from the combined statistical analysis of said at least two sets of measurement data.

The index of conformity is:
- positive if said numerical index is statistically congruent with respect to a reference numerical index obtained from the combined statistical analysis of at least two sets of measurement data obtained from said at least two measurement tests carried out on a statistically representative set of samples as reference;
- negative if said numerical index is statistically not congruent with respect to said reference numerical index.

Advantageously, the method for obtaining an index of conformity comprises at least three of the aforesaid four measurement tests, or even all four of them.

Advantageously, the statistically representative set of samples as a reference on the basis of which the reference numerical index is obtained can be a set of reference samples belonging to a same production lot of the sample that is analysed to assess its conformity, or a set of reference samples belonging to a different production lot, or a set of reference samples produced in other conditions, but subjected to the same two measurement tests to which the sample to be assessed is subjected.

The set of instruments usable in the method for obtaining a quality index of the physical and mechanical properties of foamed materials, and in particular of expanded polystyrene (EPS), according to the present invention, is defined by instruments able to characterise in a complementary and exhaustive manner from the physical and mechanical viewpoint the foamed material providing information about different parameters of the material, including the degree of sintering or of percolation of the structure, the size of the particles and/or of the porosities/cavities, the mechanical cohesion of the particles of material, the correct expansion of the material, the homogeneity of dimension, of contact, of interaction of the particles, the distribution, homogeneity and regularity of the cavities and of the pores, the quantity of humidity present inside the article.

These parameters are measured through the combined use of at least two modules for measuring the properties of a sample of foamed material selected between:
- a module for measuring the mechanical traction and/or compression properties of said sample, comprising a screw having an appropriately designed profile for the analysis of expanded sintered materials, able to be screwed inside said sample and extractable from said sample and further comprising means for measuring the traction force exerted by said screw during the extraction of said screw from said sample and/or means for measuring the penetration of said screw in said sample following the application to said screw of a limit screwing torque or means for measuring the screwing torque of said screw;
- a module for measuring the physical properties correlated with the compactness, the morphology and the size of the particles of the sample, comprising a microscope for acquiring images of the particles of the sample and, preferably, an image analysis system;
- a module for measuring the physical properties correlated with the cohesion of the particles of the sample, comprising a pressurizable needle able to be inserted in the sample and means for measuring the resistance to the passage of air or another gas from said pressurizable needle to the sample;
- a module for measuring the physical properties correlated with the humidity of the sample, comprising an analysis chamber, in turn comprising a plate condenser housed inside a Faraday cage, where the sample can be inserted between the plates of the condenser; the analysis chamber further comprises means for measuring the charging and discharging times of the condenser, where said charging and discharging times depend on the degree of humidity present in the sample.

The aforesaid at least two modules for measuring the properties provide at least two sets of measurement data that contribute to the definition of a unique index of conformity formulated through a numerical index on a statistical basis relating to the properties of the sample, measured in standard conditions of production and/or utilisation or other specific conditions.

A positive index corresponds to an index of conformity of the sample to the production, considering both the intrinsic variability of the process, and the measurement uncertainty of the measurement modules used, if the sample is found to be statistically congruent through the combined analysis of the results of two measurement tests.

A negative index corresponds to a non-conformity index if the sample is found to be statistically not congruent through the combined analysis of the results of two test parameters.

The application of models of statistical analysis of the data described below performs a classification of the degree of specific informativeness of the two or more tests, in terms of quantity of variance of the data explained by the test itself, and from this viewpoint it allows to identify a hierarchy of the tests to which can correspond a priority in their execution on the sample.

The set of instruments usable in the method for obtaining an index of conformity according to the present invention can comprise at least three of the aforesaid modules for measuring the properties of the sample or even all four of the aforesaid measurement modules.

It should be stressed that the proposed method, based on the measurements made by means of two or more of the instruments belonging to the set of instruments described above, can analyse significantly smaller and varied sample portions with respect to the standard methods and is therefore also directly applicable on manufactured articles, in some in cases in a non-destructive manner, and on the related samples, not measurable with the methods provided by the standards.

As is better explained below, the method for obtaining an index of conformity according to the present invention comprises proceeding with the characterisation of an article without drawing a sample, performing the tests of the analysis of image and of measure of the resistance to the passage of air, and possibly drawing a sample of small dimensions with variable shape depending on the article, indicatively between 2x2x1 cm and 4x4x4 cm for the traction test and indicatively between 15x15x1.5 cm for the analysis of the humidity present, or a set of sample of smaller dimensions that indicatively cover a surface of 15x15 cm.

Advantageously, the step of generating a numerical index obtained from the combined statistical analysis of said at least two sets of measurement data comprises the step of analysing each set of data obtained using uni-varied statistical methods, such as preferably averages or calculations of scraps with respect to tolerances, or classification methods, such as preferably cluster analyses, or multi-varied analyses, such as preferably analyses of the main components.

Advantageously, the step of generating a numerical index obtained from the combined statistical analysis of said at least two sets of measurement data comprises the step of obtaining at least one descriptor in aggregate form adapted to explain the maximum variance of said at least two sets of data.

Advantageously, the step of generating a numerical index obtained from the combined statistical analysis of said at least two sets of measurement data comprises the step of obtaining a plurality of descriptors in aggregate form classified on the basis of the explained quantity of variance of said at least two sets of data.

In particular, a first descriptor will be the one that allows to explain the maximum variance of the data sets, while the subsequent descriptor are those that allow to explain the residual variance of the data sets, not explained by the first descriptor.

If the first descriptor is not sufficient to generate a numerical index able to allow to obtain a positive or negative index of conformity, the subsequent descriptors can allow to achieve this result.

Advantageously, the assessment of the statistical congruence of said numerical index takes into account the variability of the process of production of said reference samples and the intrinsic one to the measurement methods employed.

Advantageously, the numerical index obtained from the combined statistical analysis of said at least two sets of measurement data is also a numerical index which can be referred to the quality of the tested sample, always in relation to the reference numerical index.

Preferably, the statistical method by way of non-exhaustive example can comprise the analysis of the main components to assess the variance of the collected data and/or classification and clustering algorithms.

The statistical method can provide one or more parameters in numerical form and/or in the form of charts, through which it is possible to obtain the numerical index.

Alternatively, the data obtained from the measurement tests can be placed in relation with table characteristics or with data measured through other procedures included in a possible company characterisation protocol, and they can provide, through extrapolation from the known reliability, information about the expected value of these characteristics.

As a specific example of statistical analysis, the principal component analysis (PCA) method can be adopted. The PCA analysis identifies the characteristics of the samples classifying them on the basis of the experimental data obtained by the measurement instruments with a numerical index in accordance with the physical value of density (unmeasured data) while the subsequent index containing the residual variance for equal density expresses the dispersion of the experimental data due to the different physical-mechanical and/or process characteristics of the samples. Values outside the normal range are highlighted by the numerical indexes obtained through the PCA procedure. Said indexes can advantageously be analysed with respect to the process variable to identify production problems.

Advantageously, the available data can be analysed with the PCA method in which all the data of at least two measurement tests are analysed simultaneously without the use, as reference, of any a priori information. This statistical method is faster and more efficient in handling the data and it is able to find more information within the data set because it is able to correlate data having different origins.

The PCA analysis classifies the samples without a prior information. In detail, the PCA produces, starting from the data measured by the various techniques, numerical indexes, called principal components numbered 1 (PC1), 2 (PC2), 3 (PC3) etc. The number of significant principal components depends on the dataset analysed; the principal components are characterised by a decreasing order able of degree of information on the system (PC1 contains the maximum variance explainable on the basis of the data, then the second one contains the residual variances etc.).

Supposing the case in which the first two components (PC1) and (PC2) adequately describe the data and representing these principal components graphically or in data tables, or analysing their composition in terms of relevance of the experimental data, it is possible to classify the data on the basis of the information content or the experimental variance and establish a hierarchy of degree of information of the various measurement techniques used to characterise the samples.

For example, the PC1, as a numerical index, extracts and aggregates the experimental data which are the best descriptors of the differences that characterise the physical properties of the sample. The PC2, as numerical index, itself classifies the samples on the basis of the dispersion of samples at equal PC1, or it correlates with the quality of the sample. In a chart that represents these two indexes PC1 and PC2 as respectively x and y axes, values of the indexes that are close to each other (and parallel with respect to an axis or positioned along a PC) are highly correlated. Equally, values of the indexes that are arranged orthogonally bear mutually independent information items. This allows for example to identify which data deriving from the measurement tests are complementary or independent.

Through this analysis, samples with anomalous values of PC1 and PC2 are immediately recognisable and due for example to non-conforming samples.

The module for measuring the mechanical traction and/or compression properties of the sample can advantageously comprise a screw with cylindrical body and thread, particularly suited for the execution of a traction test of the sample, or a screw with conical body and thread, particularly suited for the execution of a compression test of the sample.

For example, the traction test can be carried out by screwing, manually or through an actuator, the screw with cylindrical body and thread in the sample and measuring the traction force that is recorded during the extraction of the screw from the sample. The screw can be inserted preferably, but not necessarily, perpendicularly to the surface of the sample.

The means for measuring the traction force can comprise a dynamometer able to measure at least the ultimate tensile strength and preferably able to record the stress-strain curve.

The traction test begins with the start of a mechanism, motorised or manual or by means of weights, pressures, levers or systems equivalent thereto, able to apply a traction force to the screw, which is then pulled monitoring for example the stress as a function of time and/or as a function of the imposed displacement, recording the corresponding stress/time or stress/displacement curve.

The compression test instead can be carried out measuring the screwing torque necessary to screw a screw with conical body and thread inside the sample, as a function of time or as a function of the displacement corresponding to the penetration of the screw itself inside the sample or as a function of another physical-mechanical parameter.

Alternatively, the compression test can be carried out measuring the depth of penetration of the screw inside the sample applying a limit screwing torque.

In any case, the measurement of the mechanical properties of compression and/or traction of the sample provides stress/time or stress/displacement curves or numerical data, for example in the case of the measurement of penetration, which are analysed to obtain a numerical parameter expressed for example in Newton or in mm, comparable among various tests.

With regard to the test measuring the mechanical compression properties of the sample, it comprises the steps of:
- screwing the screw inside the sample;
- measuring the screwing torque of the screw;
- obtaining the mechanical compression properties of the sample from the measurement of the screwing torque of the screw.

Alternatively, the test measuring the mechanical compression properties of the sample comprises the steps of:
- screwing the screw inside the sample by applying a limit screwing torque;
- measuring the depth of penetration of the screw in the sample;
- obtaining the mechanical compression properties of the sample from the measurement of the depth of penetration of the screw inside the sample.

In the two examples of test described above, it is preferable to use the screw with conical body and thread.

The test of measuring the mechanical traction properties, comprises instead the steps of:
- screwing the screw inside the sample;
- extracting the screw from the sample by traction;
- measuring the traction force of the screw during the extraction of the screw from the sample;
- obtaining the mechanical traction properties of the sample from the measurement of the traction force of the screw.

In the example of test described above it is preferable to utilise the screw with cylindrical body and thread, because it minimises the mechanical stresses on the material of the sample during the screwing step, and it maximises the surface in contact with the material during the traction.

The analysis of the mechanical traction and/or compression properties, through the experimental data obtained, allows to describe quantitatively, among the other parameters, the properties of the material related to the degree of sintering or of percolation of the structure, to the mechanical cohesion of the particles and/or of the expanded structure, to the homogeneity of contact and of interaction of the particles.

The module for measuring the physical properties of compactness, morphology and size of the particles of the sample comprises a microscope for acquiring images of the particles themselves of the sample.

More in particular, said module preferably comprises an optical microscope to display the morphological characteristics of the material to be tested, a lighting system able to assure the reproducibility of the results, as well as an automated software for acquiring and processing of the images and analysing the data.

Preferably, the analysis of the image comprises collecting microscopy photographs, as a rule 5, indicatively from 10 to 25 magnifications, using a lens, which may be provided with a polariser, and the subsequent analysis of the image with a processing algorithm able to assess different parameters of the material, for example the extension of the contact surface between the particles or the average dimension thereof and the information obtainable from a numerical, statistical or equivalent analysis of said measured parameters.

With regard to the test of measuring the physical properties of compactness, morphology and size of the particles of said sample, it comprises the acquisition and analysis of the image of the particles of the sample in microscopy, as described above.

For this purpose, the microscope is positioned above the sample, possibly with the aid of a microscope holder and of a sample holder, and connected to the data acquisition system.

The positioning, the distance, the lighting and the focusing of the sample are optimised and controlled according to the type and shape of the sample/article, for an optimal acquisition of the image.

An adequate number of images from a minimum of 3 to any maximum, typically equal to 5, is recorded, catalogued and analysed by image analysis methods, producing a numerical result derived from the choice of appropriate descriptors that, by appropriately calibrating the system allows to characterise the sample.

Analysis of the image, through the experimental data obtained, allows to describe quantitatively, among the other parameters, properties of the material that are connected to the degree of sintering or of percolation of the structure, to the size of the particles and/or of the porosities of the EPS, to the correct expansion of the particles, to the homogeneity of size, of contact, of interaction of the particles, to the distribution, homogeneity and regularity of the cavities and of the pores.

With regard to the module for measuring the physical properties correlated with cohesion, it, as stated, comprises a pressurizable needle able to be inserted in the sample, and means for measuring the resistance to the passage of air or another gas from the pressurizable needle to the sample.

More in particular, said module allows to carry out a measurement of resistance to the passage of air or other gas by the expanded structure of the sample, providing a measure that can be correlated with the physical properties of cohesion of the particles of said sample.

The needle can have a variable number of holes along the cylindrical body, with variable diameter and distribution, and be also holed in the head or closed.

Preferably, but not exclusively, needles that are approximately 5 cm long and provided with 1, 2, 3, 5, 6, 7 or 10 holes, homogeneously distributed longitudinally and radially with respect to the axial development of the needle.

For example, in a needle comprising 3 holes, they can be distributed equidistant from each other along the longitudinal axis of development of the needle, in proximity to the distal end of the needle, and distributed radially according to angles of 120°.

In a needle comprising 6 holes, instead, they can be advantageously distributed radially according to 60° angles.

Inserting the needle into different areas of the sample, it is possible to assess the compactness of the structure of the foamed material, assessing the increase in resistance to the passage of air or other gas, determinable by the rise of the pressure that is read.

The measurement method thus comprises a test of measuring the mechanical properties of cohesion of the particles of the sample comprising the steps of:
- inserting the pressurizable needle in the sample;
- pressurizing the pressurizable needle;
- measuring the resistance to the passage of air from the pressurizable needle to the sample.

The needle of the module for measuring the mechanical properties of cohesion of the sample is inserted in the sample, possibly exploiting an adequate support, with an angle that is possibly close to 90° with respect to the insertion surface.

Specifically, an adequate pressure is set at the head of the needle, when it is not inserted in the sample, for example between 0.3 and 0.6 bar.

The value of pressure during and after the insertion of the needle in the sample is then monitored, using a pressure probe connected to a data logger or to an equivalent measuring device. From the analysis of the trend of pressure over time, or of other equivalent parameters, after insertion of the needle in the sample and/or only of the initial and final values of the pressure, the result of the test of measuring resistance to the passage of air or other gas used is determined.

Through the measurements of resistance to the passage of air or other gas by means of the needle, some values of measured counterpressure are preferably obtained, for example five (typically as the maximum value observed in a given time interval after the insertion, indicatively of the order of 10-30 seconds) that are analysed by an appropriate software that allows to characterise the physical properties correlated with the cohesion of the particles of the sample.

The analysis of the tests of resistance to the passage of air, through the experimental data obtained, allows to describe quantitatively, among the other parameters, the properties of the material connected with the degree of sintering or of percolation of the structure and with the cohesion of the particles and/or of the expanded structure.

Lastly, the module for measuring the humidity of the sample preferably comprises an analysis chamber which in turn comprises a plate condenser housed inside a Faraday cage.

The sample is inserted between the plates of the condenser, and the analysis chamber is appropriately provided with means for measuring the charging and discharging times of the condenser.

The charging and discharging times can be correlated, after appropriate calibration of the analysis chamber by means of samples having known humidity, with the quantity of humidity present in the sample.

The humidity measurements entail repeating the measurement for an adequate number of times, preferably higher than ten; typically, twenty-five measurements are taken. The series of measurements is repeated twice and the average of the measurements is calculated.

The acquisition software automatically manages the collection and analysis of these data.

Through the calibration carried out with samples having known humidity, it is possible to convert the arbitrary units read by the instrument or to obtain the value of humidity present in the material, in terms of grams of water in the sample or relative humidity with respect to the dry sample.

In general, for all the tests provided by the method according to the present invention, the sampling of the materials must take into account the different degree of destructiveness of the sample.

The microscopic test is not destructive and does not necessarily require the preparation of a sample of particular dimensions starting from the article to be analysed. This test requires only the obtainment of a flat face indicatively with sides of at least 1 cm and it can be repeated an infinite number of times. The test, then, is completely non-destructive for the article.

The needle test is prevalently non-destructive and does not require the preparation of a sample. Nevertheless, each measurement leaves a hole that weakens the article and influences any subsequent measurement carried out in the same area of the article. It can then be repeated a finite number of times depending on the size of the sample or of the article. Indicatively, it can be repeated once every 10 cm³ of article/sample.

The humidity test is destructive for the article only if the dimensions of the article exceed the dimensions of the analysis chamber. In this case, it is necessary to obtain from the article a sample that can be inserted in the analysis chamber.

The measurement of the humidity is not destructive for the article having dimensions that are compatible with those of the analysis chamber and it can be repeated an infinite number of times.

The traction and/or compression test is destructive and irreversible because it entails cutting a cube of foamed material with sides of approximately 5 cm, which is destroyed in the test. In compliance with good laboratory practices, each measurement must be repeated a number of times necessary to obtain a good estimate of the error associated with the measurement, for example from a minimum of three tests and typically five tests.

Each of the measurement modules according to the present invention provides at least one set of measurement data. Carrying out as stated at least two of said measurement tests, the method for obtaining an index of conformity of the physical and mechanical properties of expanded sintered polystyrene according to the present invention provides at least two sets of measurement data.
Once these data sets are obtained, the method comprises the step of defining a unique index of conformity of the properties of said sample on the basis of at least two sets of measurement data, which can be positive or negative, as described above.

Advantageously, the index of conformity can also be defined by a numerical value in a scale of values, where the classification of the index as positive requires that the numerical value be higher than a pre-determined positive threshold, while the classification of the index as negative requires that the numerical value be lower than a pre-determined negative threshold. An intermediate index refers to the case in which the numerical value is neither above the positive threshold, or below the negative threshold. Said intermediate index can for example be used to qualify a sample as a "second choice" sample.

The method for obtaining an index of conformity thus allows not only to define whether the article or the related sample does or does not possess the desired mechanical and physical properties, but also to distinguish the quality of the article or of the related sample on the basis of the combined analysis of these mechanical and physical properties. In this way it is possible to classify the article according to its properties, distinguishing for example between first choice, second choice, or scrap articles.

Advantageously, the method for obtaining an index of conformity, according to the invention, also allows to forecast and suggest which measurement tests, of the four applicable tests, are sufficient to provide a reliable index of conformity for the particular sample whose conformity is to be defined.

The method for obtaining an index of conformity of the physical and mechanical properties of the foamed material according to the present invention can be carried out according to different test modes:
- Single sample test mode;
- Multiple sample test mode;
- Test mode depending on time and/or on the surrounding environment.

In the single sample test mode, where the sample is subjected to all four of the measurement tests provided by the method according to the present invention, the preparation of the sample entails readying an adequate number of samples from the statistical viewpoint (from a minimum of three to a maximum, typically, of five) to be subjected to the measurement tests. Depending on the dimensions of the article, it may be necessary to obtain from the article several samples for execution of the measurements.

In particular, the first test that is carried out is the measurement test by means of optical microscopy, which is non-destructive, while the last test is the measurement test by means of screw, which is destructive of the sample. Depending on the dimensions and on the shape of the article or of the samples obtained therefrom, it is then possible to carry out first the humidity measurement test, or first the test of the measurement of resistance to the passage of air.

Once the tests are carried out as described above, the data obtained from each individual test are analysed using both univaried statistical methods (for example averages, calculations of scraps with respect to tolerances, etc.), and classification methods such as cluster analysis and the like, and/or multivaried analyses such as analysis of the principal components, by way of non-exclusive exemplifying list.

This step of processing the data obtained in the individual tests proposes a unique positive or negative index of conformity starting from a numerical index resulting from the combined analysis of the properties of the material (mechanical resistance, humidity, permeability to air and compactness) determined in the various tests and of the relevance of the various tests in terms of quantity of variance of the data, explained by the tests themselves, able to classify the sample being tested as conforming or non-conforming with respect to a reference statistical set.

Combining data of tests that refer to different properties of the sample, a judgement can be expressed on the sample and hence on the related article, which is exhaustive and which presents an optimal minimisation of the experimental error.

The fallibility of a sample can derive from various origins (starting material, production problems, storage of the material, human errors, etc.) and the effect is differently and sometimes specifically measurable and identifiable by some of the various tests.

The variability of the characteristics determined by the complementary use of the various tests assures control of a very large number of cases of the variability of the production processes, above all if the defects are less marked as a whole and may not be detected by measurements made with individual measurement tests, whose results are not combined to have a unique judgement.

According to an alternative mode of execution of the analysis according to the present invention, the tests can be carried out on multiple samples.

This mode is similar to the previous one but it differs in the step of preparing the sample that comprises, in this case, preparing, starting from the article to be analysed, different samples for the different measurement tests. This mode allows to preserve the samples that are not destroyed for the execution of the tests for purposes of archiving and possible re-measurement over time.

An adequate number of samples, from a minimum of three to a maximum of typically five, is cut from the article into cubes with variable sides, for example 5 cm, for each of the tests to be carried out.

Each sample is catalogued with a name that indicates the lot and test number. The samples are divided into groups, with appropriate sampling directed at eliminating artefacts (e.g. samples cut in different areas of the article with casual dispersion for the different techniques) and sent to the subsequent steps.

The tests are carried out as in the single sample mode, but using each sample for a single type of measurement test.

According to an alternative execution mode of the analysis method according to the present invention, the measurement tests can be carried out, on the same article or on the related sample, according to a time sequence and/or in variable environmental conditions.

For example, the non-destructive test on the article (microscopy), the non-destructive test on the sample, or on the article (humidity) and the partially destructive test on the sample, or on the article (permeation to air) can be repeated in time on the same sample or on the same article after the passage of an adequate time interval, and/or in controlled environmental conditions (temperature, humidity, light, etc.), to control the quality of the material and the result of the measurement tests as a function of the elapsing of time and of changes in the environmental conditions, work conditions, and conditions of utilisation of the articles.

The traction and/or compression test, which is destructive, can be repeated on a homologous series of statistically identical samples by sampling and with proven similarity for example with one of the non-destructive tests like microscopy and humidity. In this case the measurements are carried out with the multiple sample measurement method, performing measurements on different but homologous samples subjected to different treatments in environmental chambers or with the imposition of other external parameters, for example temperature, pressure, humidity, light, heat, or simulating particular conditions of storage, utilisation, contact with liquids for industrial or food use etc.

The analysis of the data is carried out taking into account the time parameter indicating the change of both the instrumental response and of the cumulative reference deriving from the numerical index obtained from application of the statistical models as a function of time and/or of the physical, chemical, mechanical external stimulus imposed on the sample.

The method of analysis for obtaining an index of conformity thus conceived is susceptible to numerous modifications and variants, without departing from the scope of the invention; moreover, all details can be replaced with technically equivalent elements.

## Claims

1. Method for obtaining an index of conformity of the physical and mechanical properties of foamed materials, in particular of expanded sintered polystyrene (EPS), comprising at least two tests for measuring the properties of a sample of foamed material selected from:
- a test for measuring the mechanical traction and/or compression properties of said sample;
- a test for measuring the physical properties correlated with the compactness, the morphology and the size of the particles of said sample;
- a test for measuring the physical properties correlated with the cohesion of the particles of said sample;
- a test for measuring the physical properties correlated with the humidity of said sample;
said at least two tests for measuring the properties of said sample providing at least two sets of measurement data;
said method further comprising a step of defining an index of conformity of the properties of said sample, said step of defining an index of conformity of the properties being **characterised in that** it is based on said at least two sets of measurement data, and **in that** it comprises the step of generating a numerical index obtained from the combined statistical analysis of said at least two sets of measurement data;
said index of conformity being:
- positive if said numerical index is statistically congruent with respect to a reference numerical index obtained from the combined statistical analysis of at least two sets of measurement data obtained from said at least two measurement tests carried out on a statistically representative set of samples as reference;
- negative if said numerical index is statistically not congruent with respect to said reference numerical index.

2. Method for obtaining an index of conformity, according to claim 1, **characterised in that** it comprises at least three of said tests for measuring the properties of said sample.

3. Method for obtaining an index of conformity, according to claim 2, **characterised in that** it comprises all four of said tests for measuring the properties of said sample.

4. Method for obtaining an index of conformity, according to one or more of the preceding claims, **characterised in that** said test for measuring the mechanical traction and/or compression properties of said sample, if selected among the tests for measuring the properties of said sample, comprises the steps of:
- screwing said screw inside said sample;
- measuring the screwing torque of said screw;
- obtaining the mechanical compression properties of said sample from said measurement of said screwing torque of said screw.

5. Method for obtaining an index of conformity, according to claims 1, 2 or 3, **characterised in that** said test for measuring the mechanical traction and/or compression properties of said sample, if selected among the tests for measuring the properties of said sample, comprises the steps of:
- screwing said screw inside said sample;
- extracting said screw from said sample by traction;
- measuring the traction force of said screw during the extraction of said screw from said sample;
- obtaining the mechanical traction properties of said sample from said measurement of said traction force of said screw.

6. Method for obtaining an index of conformity, according to claims 1, 2 or 3, **characterised in that** said test for measuring the mechanical traction and/or compression properties of said sample, if selected among the tests for measuring the properties of said sample, comprises the steps of:
- screwing said screw inside said sample by applying a limit screwing torque;
- measuring the depth of penetration of said screw in said sample;
- obtaining the mechanical compression properties of said sample from said measurement of said depth of penetration of said screw.

7. Method for obtaining an index of conformity, according to one or more of the preceding claims, **characterised in that** said test for measuring the physical properties correlated with the compactness, the morphology and the size of the particles of said sample, if selected among the tests for measuring the properties of said sample, comprises the step of acquiring images of said particles of said sample through a microscope and the step of analysis treatment of the image.

8. Method for obtaining an index of conformity, according to one or more of the preceding claims, **characterised in that** said test for measuring the physical properties correlated with the cohesion of the particles of said sample, if selected among the tests for measuring the properties of said sample, comprises the steps of:
- inserting a pressurizable needle in said sample;
- pressurizing said pressurizable needle;
- measuring the resistance to the passage of air from said pressurizable needle to said sample.

9. Method for obtaining an index of conformity, according to one or more of the preceding claims, **characterised in that** said test for measuring the physical properties correlated with the humidity of the particles of said sample, if selected among the tests for measuring the properties of said sample, comprises the steps of:
- inserting said sample in an analysis chamber comprising a plate-type condenser housed inside a Faraday cage,
- measuring the charging and discharging times of said condenser, said charging and discharging times depending on the degree of humidity present in said sample.

10. Method for obtaining an index of conformity, according to one or more of the preceding claims, **characterised in that** said step of generating a numerical index obtained from the combined statistical analysis of said at least two sets of measurement data comprises the step of analysing each of said at least two sets of data obtained using uni-varied statistical methods, such as preferably averages, calculations of scraps with respect to tolerances, or classification methods, such as preferably cluster analyses, or multi-varied analyses, such as preferably analyses of the main components.

11. Method for obtaining an index of conformity, according to one of the preceding claims, **characterised in that** said step of generating a numerical index obtained from the combined statistical analysis of said at least two sets of measurement data comprises the step of obtaining at least one descriptor in aggregate form adapted to explain the maximum variance of said at least two sets of data.

12. Method for obtaining an index of conformity, according to one or more of the preceding claims, **characterised in that** said step of generating a numerical index obtained from the combined statistical analysis of said at least two sets of measurement data comprises the step of obtaining a plurality of descriptors in aggregate form classified on the basis of the explained quantity of variance of said at least two sets of data.

13. Method for obtaining an index of conformity, according to one or more of the preceding claims, **characterised in that** the assessment of the statistical congruence of said numerical index takes into account the variability of the production process of said reference samples and the intrinsic variability of the measurement methods used.

14. Method for obtaining an index of conformity, according to one or more of the preceding claims, **characterised in that** said sample is a sample of expanded sintered polystyrene (EPS).

## Patentansprüche

1. Verfahren zum Erhalten eines Konformitätsindex der physikalischen und mechanischen Eigenschaften von geschäumten Materialien, insbesondere von expandiertem gesintertem Polystyrol (EPS), umfassend mindestens zwei Tests zum Messen der Eigenschaften einer Probe von geschäumtem Material, ausgewählt aus:
- einem Test zum Messen der mechanischen Zug- und/oder Kompressionseigenschaften der Probe,
- einem Test zum Messen der mit der Kompaktheit, der Morphologie und der Größe der Partikel der Probe in Bezug stehenden physikalischen Eigenschaften,
- einem Test zum Messen der mit der Kohäsion der Partikel der Probe in Bezug stehenden physikalischen Eigenschaften,
- einem Test zum Messen der mit der Feuchtigkeit der Probe in Bezug stehenden physikalischen Eigenschaften,
wobei die mindestens zwei Tests zum Messen der Eigenschaften der Probe mindestens zwei Sätze von Messdaten liefern,
wobei das Verfahren ferner einen Schritt des Definierens eines Konformitätsindex der Eigenschaften der Probe umfasst, wobei der Schritt des Definierens eines Konformitätsindex der Eigenschaften **dadurch gekennzeichnet ist, dass** er auf den mindestens zwei Sätzen von Messdaten beruht und dass er den Schritt des Erzeugens eines numerischen Index umfasst, der aus der kombinierten statistischen Analyse der mindestens zwei Sätze von Messdaten erhalten wird,
wobei der Index der Konformität:
- positiv ist, wenn der numerische Index mit einem numerischen Referenzindex statistisch kongruent ist, der aus der kombinierten statistischen Analyse von mindestens zwei Sätzen von Messdaten erhalten wird, die aus den mindestens zwei Messversuchen an einem statistisch repräsentativen Satz von Proben als Referenz erhalten wurden,
- negativ ist, wenn der numerische Index mit dem numerischen Referenzindex statistisch nicht kongruent ist.

2. Verfahren zum Erhalten eines Übereinstimmungsindex nach Anspruch 1, **dadurch gekennzeichnet, dass** es mindestens drei der Tests zur Messung der Eigenschaften der Probe umfasst.

3. Verfahren zum Erhalten eines Konformitätsindex nach Anspruch 2, **dadurch gekennzeichnet, dass** es alle vier Tests zur Messung der Eigenschaften der Probe umfasst.

4. Verfahren zum Erhalten eines Konformitätsindex nach einem oder mehreren der vorhergehenden Ansprüche, **dadurch gekennzeichnet, dass** der Test zum Messen der mechanischen Zug- und/oder Kompressionseigenschaften der Probe, wenn er aus den Tests zum Messen der Eigenschaften der Probe ausgewählt wird, folgende Schritte umfasst:
- Einschrauben der Schraube in die Probe,
- Messen des Schraubmoments der Schraube,
- Erhalten der mechanischen Kompressionseigenschaften der Probe aus der Messung des Schraubendrehmoments der Schraube.

5. Verfahren zum Erhalten eines Konformitätsindex nach den Ansprüchen 1, 2 oder 3, **dadurch gekennzeichnet, dass** der Test zum Messen der mechanischen Zug- und/oder Kompressionseigenschaften der Probe, wenn er aus den Tests zum Messen der Eigenschaften der Probe ausgewählt wird, folgende Schritte umfasst:
- Einschrauben der Schraube in die Probe,
- Extrahieren der Schraube aus der Probe durch Zugkraft,
- Messen der Zugkraft der Schraube während der Extraktion der Schraube aus der Probe,
- Erhalten der mechanischen Zugeigenschaften der Probe durch die Messung der Zugkraft der Schraube.

6. Verfahren zum Erhalten eines Konformitätsindex nach den Ansprüchen 1, 2 oder 3, **dadurch gekennzeichnet, dass** der Test zum Messen der mechanischen Zug- und/oder Kompressionseigenschaften der Probe, wenn er aus den Tests zum Messen der Eigenschaften der Probe ausgewählt wird, folgende Schritte umfasst:
- Einschrauben der Schraube in die Probe durch Aufbringen eines Grenz-Anzugsdrehmoments,
- Messen der Eindringtiefe der Schraube in die Probe,
- Erhalten der mechanischen Kompressionseigenschaften der Probe aus der Messung der Eindringtiefe der Schraube.

7. Verfahren zum Erhalten eines Konformitätsindex gemäß einem oder mehreren der vorhergehenden Ansprüche, **dadurch gekennzeichnet, dass** der Test zum Messen der physikalischen Eigenschaften, die mit der Kompaktheit, der Morphologie und der Größe der Partikel der Probe in Bezug stehen, wenn er unter den Tests zum Messen der Eigenschaften der Probe ausgewählt wird, den Schritt des Erfassens von Bildern der Partikel der Probe durch ein Mikroskop und den Schritt der Analysebehandlung des Bildes umfasst.

8. Verfahren zum Erhalten eines Konformitätsindex gemäß einem oder mehreren der vorhergehenden Ansprüche, **dadurch gekennzeichnet, dass** der Test zum Messen der physikalischen Eigenschaften, die mit der Kohäsion der Partikel der Probe in Bezug stehen, wenn er unter den Tests zum Messen der Eigenschaften der Probe ausgewählt wird, folgende Schritte umfasst:
- Einführen einer mit Druck beaufschlagbaren Nadel in die Probe,
- Druckbeaufschlagen der mit Druck beaufschlagbaren Nadel,
- Messen des Widerstandes gegen den Durchgang von Luft von der mit Druck beaufschlagbaren Nadel zu der Probe.

9. Verfahren zum Erhalten eines Konformitätsindex gemäß einem oder mehreren der vorhergehenden Ansprüche, **dadurch gekennzeichnet, dass** der Test zum Messen der physikalischen Eigenschaften, die mit der Feuchtigkeit der Partikel der Probe in Bezug stehen, wenn er aus den Tests zum Messen der Eigenschaften der Probe ausgewählt wird, folgende Schritte umfasst:
- Einsetzen der Probe in eine Analysekammer, die einen in einem faradayschen Käfig untergebrachten Plattenkondensator umfasst,
- Messen der Lade- und Entladezeiten des Kondensators, wobei die Lade- und Entladezeiten vom Feuchtigkeitsgrad in der Probe abhängen.

10. Verfahren zum Erhalten eines Konformitätsindex gemäß einem oder mehreren der vorhergehenden Ansprüche, **dadurch gekennzeichnet, dass** der Schritt des Erzeugens eines aus der kombinierten statistischen Analyse der mindestens zwei Sätze von Messdaten erhaltenen numerischen Index den Schritt des Analysierens jedes der mindestens zwei Sätze von Daten umfasst, die unter Verwendung von univariaten statistischen Methoden wie vorzugsweise Mittelwerte, Berechnungen von Ausschüssen in Bezug auf Toleranzen oder Klassifizierungsmethoden wie vorzugsweise Clusteranalysen, oder multivariaten Analysen wie vorzugsweise Analysen der Hauptkomponenten erhalten werden.

11. Verfahren zum Erhalten eines Konformitätsindex gemäß einem der vorhergehenden Ansprüche, **dadurch gekennzeichnet, dass** der Schritt des Erzeugens eines aus der kombinierten statistischen Analyse der mindestens zwei Sätze von Messdaten erhaltenen numerischen Index den Schritt des Erhaltens mindestens eines Deskriptors in aggregierter Form umfasst, der geeignet ist, die maximale Varianz der mindestens zwei Sätze von Daten zu erklären.

12. Verfahren zum Erhalten eines Konformitätsindex gemäß einem oder mehreren der vorhergehenden Ansprüche, **dadurch gekennzeichnet, dass** der Schritt des Erzeugens eines aus der kombinierten statistischen Analyse der mindestens zwei Sätze von Messdaten erhaltenen numerischen Index den Schritt des Erhaltens einer Vielzahl von Deskriptoren in aggregierter Form umfasst, die auf der Grundlage des erklärten Quantität der Varianz der mindestens zwei Sätze von Daten klassifiziert werden.

13. Verfahren zum Erhalten eines Konformitätsindex gemäß einem oder mehreren der vorhergehenden Ansprüche, **dadurch gekennzeichnet, dass** die Bewertung der statistischen Kongruenz des numerischen Index die Variabilität des Produktionsprozesses der Referenzproben und die intrinsische Variabilität der eingesetzten Messmethoden berücksichtigt.

14. Verfahren zum Erhalten eines Konformitätsindex gemäß einem oder mehreren der vorhergehenden Ansprüche, **dadurch gekennzeichnet, dass** das genannte Muster ein Muster aus expandiertem gesintertem Polystyrol (EPS) ist.

## Revendications

1. Procédé pour obtenir un indice de conformité des propriétés physiques et mécaniques de matériaux en mousse, en particulier de polystyrène expansé fritté (EPS), comprenant au moins deux tests pour mesurer les propriétés d'un échantillon de matériau en mousse sélectionné parmi :
- un test pour mesurer les propriétés mécaniques de traction et/ou de compression dudit échantillon ;
- un test pour mesurer les propriétés physiques corrélées à la compacité, à la morphologie et à la taille des particules dudit échantillon ;
- un test pour mesurer les propriétés physiques corrélées à la cohésion des particules dudit échantillon ;
- un test pour mesurer les propriétés physiques corrélées à l'humidité dudit échantillon ;
lesdits au moins deux tests pour mesurer les propriétés dudit échantillon fournissant au moins deux ensembles de données de mesure ;
ledit procédé comprenant en outre une étape consistant à définir un indice de conformité des propriétés dudit échantillon, ladite étape consistant à définir un indice de conformité des propriétés étant **caractérisée en ce qu'**elle est basée sur lesdits au moins deux ensembles de données de mesure, et **en ce qu'**elle comprend l'étape consistant à générer un indice numérique obtenu à partir de l'analyse statistique combinée desdits au moins deux ensembles de données de mesure ;
ledit indice de conformité étant :
- positif si ledit indice numérique est statistiquement congruent par rapport à un indice numérique de référence obtenu à partir de l'analyse statistique combinée d'au moins deux ensembles de données de mesure obtenus à partir desdits au moins deux tests de mesure réalisés sur un ensemble statistiquement représentatif d'échantillons comme référence ;
- négatif si ledit indice numérique est statistiquement non congruent par rapport audit indice numérique de référence.

2. Procédé pour obtenir un indice de conformité, selon la revendication 1, **caractérisé en ce qu'**il comprend au moins trois desdits tests pour mesurer les propriétés dudit échantillon.

3. Procédé pour obtenir un indice de conformité, selon la revendication 2, **caractérisé en ce qu'**il comprend la totalité des quatre dits tests pour mesurer les propriétés dudit échantillon.

4. Procédé pour obtenir un indice de conformité, selon une ou plusieurs des revendications précédentes, **caractérisé en ce que** ledit test pour mesurer les propriétés mécaniques de traction et/ou de compression dudit échantillon, si sélectionné parmi les tests pour mesurer les propriétés dudit échantillon, comprend les étapes consistant à :
- visser ladite vis à l'intérieur dudit échantillon ;
- mesurer le couple de vissage de ladite vis ;
- obtenir les propriétés mécaniques de compression dudit échantillon à partir de ladite mesure dudit couple de vissage de ladite vis.

5. Procédé pour obtenir un indice de conformité, selon les revendications 1, 2 ou 3, **caractérisé en ce que** ledit test pour mesurer les propriétés mécaniques de traction et/ou de compression dudit échantillon, si sélectionné parmi les tests pour mesurer les propriétés dudit échantillon, comprend les étapes consistant à :
- visser ladite vis à l'intérieur dudit échantillon ;
- extraire ladite vis dudit échantillon par traction ;
- mesurer la force de traction de ladite vis lors de l'extraction de ladite vis dudit échantillon ;
- obtenir les propriétés mécaniques de traction dudit échantillon à partir de ladite mesure de ladite force de traction de ladite vis.

6. Procédé pour obtenir un indice de conformité, selon les revendications 1, 2 ou 3, **caractérisé en ce que** ledit test pour mesurer les propriétés mécaniques de traction et/ou de compression dudit échantillon, si sélectionné parmi les tests pour mesurer les propriétés dudit échantillon, comprend les étapes consistant à :
- visser ladite vis à l'intérieur dudit échantillon en appliquant un couple de vissage limite ;
- mesurer la profondeur de pénétration de ladite vis dans ledit échantillon ;
- obtenir les propriétés mécaniques de compression dudit échantillon à partir de ladite mesure de ladite profondeur de pénétration de ladite vis.

7. Procédé pour obtenir un indice de conformité, selon une ou plusieurs des revendications précédentes, **caractérisé en ce que** ledit test pour mesurer les propriétés physiques corrélées à la compacité, la morphologie et la taille des particules dudit échantillon, si sélectionné parmi les tests pour mesurer les propriétés dudit échantillon, comprend l'étape consistant à acquérir des images desdites particules dudit échantillon à travers un microscope et l'étape de traitement d'analyse de l'image.

8. Procédé pour obtenir un indice de conformité, selon une ou plusieurs des revendications précédentes, **caractérisé en ce que** ledit test pour mesurer les propriétés physiques corrélées à la cohésion des particules dudit échantillon, si sélectionné parmi les tests pour mesurer les propriétés dudit échantillon, comprend les étapes consistant à :
- insérer une aiguille pouvant être mise sous pression dans ledit échantillon ;
- mettre sous pression ladite aiguille pouvant être mise sous pression ;
- mesurer la résistance au passage de l'air de ladite aiguille pouvant être mise sous pression audit échantillon.

9. Procédé pour obtenir un indice de conformité, selon une ou plusieurs des revendications précédentes, **caractérisé en ce que** ledit test pour mesurer les propriétés physiques corrélées à l'humidité des particules dudit échantillon, si sélectionné parmi les tests pour mesurer les propriétés dudit échantillon, comprend les étapes consistant à :
- insérer ledit échantillon dans une chambre d'analyse comprenant un condenseur de type plaque logé à l'intérieur d'une cage de Faraday,
- mesurer les temps de charge et de décharge dudit condenseur, lesdits temps de charge et de décharge dépendant du degré d'humidité présent dans ledit échantillon.

10. Procédé pour obtenir un indice de conformité, selon une ou plusieurs des revendications précédentes, **caractérisé en ce que** ladite étape consistant à générer un indice numérique obtenu à partir de l'analyse statistique combinée desdits au moins deux ensembles de données de mesure comprend l'étape consistant à analyser chacun desdits au moins deux ensembles de données obtenus à l'aide de procédés statistiques uni-variés, tels que de préférence des moyennes, des calculs de déchets par rapport à des tolérances, ou des procédés de classification, tels que de préférence des analyses en grappe, ou des analyses multi-variées, telles que de préférence des analyses des composants principaux.

11. Procédé pour obtenir un indice de conformité, selon l'une des revendications précédentes, **caractérisé en ce que** ladite étape consistant à générer un indice numérique obtenu à partir de l'analyse statistique combinée desdits au moins deux ensembles de données de mesure comprend l'étape consistant à obtenir au moins un descripteur sous forme agrégée apte à expliquer la variance maximale desdits au moins deux ensembles de données.

12. Procédé pour obtenir un indice de conformité, selon une ou plusieurs des revendications précédentes, **caractérisé en ce que** ladite étape consistant à générer un indice numérique obtenu à partir de l'analyse statistique combinée desdits au moins deux ensembles de données de mesure comprend l'étape consistant à obtenir une pluralité de descripteurs sous forme agrégée classés sur la base de la quantité de variance expliquée desdits au moins deux ensembles de données.

13. Procédé pour obtenir un indice de conformité, selon une ou plusieurs des revendications précédentes, **caractérisé en ce que** l'évaluation de la congruence statistique dudit indice numérique tient compte de la variabilité du processus de production desdits échantillons de référence et de la variabilité intrinsèque des procédés de mesure utilisés.

14. Procédé pour obtenir un indice de conformité, selon une ou plusieurs des revendications précédentes, **caractérisé en ce que** ledit échantillon est un échantillon de polystyrène expansé fritté (EPS).
